(19) **Europäisches Patentamt / European Patent Office / Office européen des brevets**

(11) **EP 2 421 117 B1**

(12) **FASCICULE DE BREVET EUROPEEN**

(45) Date de publication et mention de la délivrance du brevet:
**01.03.2017 Bulletin 2017/09**

(21) Numéro de dépôt: **11305697.2**

(22) Date de dépôt: **07.06.2011**

(51) Int Cl.:
*H02J 7/02* (2016.01)   *B60L 11/18* (2006.01)
*H02M 1/14* (2006.01)   *H02M 7/00* (2006.01)
*H02M 7/797* (2006.01)   *H02M 1/12* (2006.01)
*H02M 7/5387* (2007.01)

(54) **Procédé de commande de commutateurs de bras de commutation, notamment pour la charge de moyens d'accumulation, et dispositif de charge correspondant**

Steuerverfahren von Umschaltern von Führungsarmen, insbesondere für die Aufladung von Akkumulatoren, sowie entsprechende Aufladevorrichtung

Method for controlling switching arm switches, in particular for loading accumulation resources, and the corresponding loading device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2010 FR 1055105**

(43) Date de publication de la demande:
**22.02.2012 Bulletin 2012/08**

(73) Titulaire: **Valeo Systèmes de Contrôle Moteur 95800 Cergy (FR)**

(72) Inventeurs:
• **Bouchez, Boris**
  **95800 Cergy Le Haut (FR)**
• **De Sousa, Luis**
  **95670 Eragny Sur Oise (FR)**

(74) Mandataire: **Argyma**
  **36, rue d'Alsace Lorraine**
  **31000 Toulouse (FR)**

(56) Documents cités:
**WO-A1-2010/057893**

• **HOBRAICHE J ET AL: "Offline optimized pulse pattern with a view to reducing DC-link capacitor application to a starter generator", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20 juin 2004 (2004-06-20), page 3336, XP010738485, DOI: DOI:10.1109/PESC.2004.1355065 ISBN: 978-0-7803-8399-9**

**Description**

La présente invention concerne un procédé de commande des commutateurs d'un système comprenant lesdits commutateurs. Un tel système peut être utilisé lors d'opérations de charge dans le domaine des moteurs ou alternateurs alimentés par des batteries rechargeables. L'invention trouvera avantageusement application dans le domaine des automobiles électriques dans lesquelles les batteries peuvent alimenter le moteur via un onduleur et être rechargées lorsque l'automobile est à l'arrêt.

Toutefois, bien que particulièrement prévus pour une telle application le dispositif et le procédé associé pourront être utilisés dans d'autres domaines et notamment dans des dispositifs de génération d'énergie de type éolien ou hydraulique.

Classiquement un véhicule électrique est équipé de batteries haute tension délivrant un courant continu à un onduleur qui transforme ce courant continu en un courant alternatif permettant d'alimenter un moteur électrique, ce dernier assurant la mise en mouvement du véhicule.

De manière à assurer la recharge de ces batteries haute tension il est connu d'équiper le véhicule d'un dispositif de charge intégré au véhicule électrique comprenant un convertisseur contrôleur de puissance sans pont de diode également connu sous le nom de « Bridgeless PFC ».

Des courants de mode commun générés par le découpage du convertisseur circulent dans les capacités parasites que présente l'électronique par rapport au châssis, ou le moteur par rapport au châssis ou bien encore la batterie par rapport aux châssis. Ces courants se rebouclent par le châssis, le fil de terre relié au neutre du réseau électrique. Le chargeur émet donc des perturbations sur le réseau électrique. Des normes limitent l'émission de perturbations basses fréquences sur le réseau électrique afin d'éviter qu'une personne soit électrisée ou électrocutée à cause des courants qui circulent dans le châssis. On identifie de plus le document WO 2010/057893 A1 qui décrit un procédé et un dispositif selon le preambule des revendications independantes.

L'invention a donc pour objectif de limiter ces perturbations basses fréquences en évitant que les capacités parasites ne soient excitées par des variations de tensions.

À cet effet, l'invention a pour objet, selon un de ses aspects, un procédé de commande des commutateurs d'un système connecté à un réseau électrique extérieur, le système comprenant au moins un premier et un deuxième bras de commutation comportant respectivement deux commutateurs, ledit procédé comportant une étape de pilotage des commutateurs des bras de commutation par transmission de signaux de commande de modulation par largeur d'impulsion, caractérisé en ce qu'on pilote les commutateurs du deuxième bras de commutation en adaptant la largeur d'impulsion des signaux de commande de manière à générer une tension alternative en opposition de phase par rapport à la tension aux bornes d'une inductance de compensation connectée d'une part au deuxième bras et d'autre part au neutre dudit réseau, de sorte que la tension entre le neutre dudit réseau et la masse soit continue.

Le système est par exemple constitué par les bras de commutation.

Lorsque la tension entre le neutre du réseau et la masse est continue, les capacités parasites ne risquent donc plus d'être excitées par des variations de tensions et on limite ainsi les perturbations basses fréquences.

L'invention a encore pour objet, selon un autre de ses aspects, un procédé de charge de moyens d'accumulation par un réseau électrique extérieur par l'intermédiaire d'au moins un premier et un deuxième bras de commutation comportant respectivement deux commutateurs, ledit procédé comportant au moins l'étape de pilotage des commutateurs des bras de commutation par transmission de signaux de commande de modulation par largeur d'impulsion du procédé de commande ci-dessus, selon laquelle on pilote les commutateurs du deuxième bras de commutation en adaptant la largeur d'impulsion des signaux de commande de manière à générer une tension alternative en opposition de phase par rapport à la tension aux bornes d'une inductance de compensation connectée d'une part au deuxième bras et d'autre part au neutre dudit réseau, de sorte que la tension entre le neutre dudit réseau et la masse soit continue.

Ledit procédé de commande ou de charge peut comporter en outre une ou plusieurs des caractéristiques suivantes, seules ou en combinaison :

-    on pilote le deuxième bras de commutation en boucle ouverte et en ce que la largeur d'impulsion est choisie sensiblement égale en valeur moyenne à l'opposé de la tension alternative de l'inductance de compensation,

-    on pilote le deuxième bras de commutation en boucle fermée en variant la largeur d'impulsion de sorte que la tension entre le neutre dudit réseau et la masse soit asservie à une consigne,

-    ledit procédé comprend les étapes suivantes :

    •    on mesure la tension entre le neutre dudit réseau et la masse,
    •    on compare la tension mesurée à la consigne,
    •    si la tension mesurée diffère de la consigne, on modifie la largeur d'impulsion de sorte que la tension entre le neutre dudit réseau et la masse soit sensiblement égale à la consigne,

- on pilote le premier bras de manière à absorber un courant sinusoïdal.

En boucle fermée, les commutateurs du deuxième bras de commutation peuvent être pilotés par des signaux de commande dont la largeur d'impulsion est adaptée dynamiquement de façon à ce que la tension entre le neutre du réseau et la masse soit asservie à une consigne étant notamment la tension continue générée par le deuxième bras.

En boucle ouverte, la largeur d'impulsion peut ne pas être asservie à une consigne.

L'invention concerne également un dispositif de charge correspondant pour la mise en oeuvre du procédé de charge tel que défini ci-dessus. Ce dispositif est un dispositif électrique de charge de moyens d'accumulation par un réseau électrique extérieur, lesdits moyens d'accumulation étant configurés pour alimenter un moteur à courant alternatif, ledit dispositif électrique comportant :

- un onduleur connecté entre ledit moteur et les moyens d'accumulation, l'onduleur comportant au moins un premier et un deuxième bras de commutation comprenant respectivement deux commutateurs, lesdits bras de commutation étant reliés par leurs points milieu à la phase dudit moteur, et
- un circuit de commande desdits commutateurs par transmission de signaux de commande de modulation par largeur d'impulsion,

caractérisé en ce que :

- ledit dispositif comporte en outre une inductance de compensation reliée au deuxième bras de commutation et au neutre dudit réseau, et en ce que
- le circuit de commande est configuré pour piloter les commutateurs du deuxième bras par transmission de signaux de commande dont la largeur d'impulsion est adaptée pour que le deuxième bras génère une tension alternative en opposition de phase par rapport à la tension aux bornes de l'inductance de compensation, de sorte que la tension entre le neutre dudit réseau et la masse soit continue.

Ledit dispositif peut comporter en outre une ou plusieurs des caractéristiques suivantes, seules ou en combinaison :

- ledit dispositif est monophasé,
- ledit dispositif est configuré pour piloter le deuxième bras de commutation en boucle ouverte,
- ledit dispositif est configuré pour piloter le deuxième bras en boucle fermée par asservissement de la tension du neutre à une consigne, et ledit dispositif comporte au moins un moyen de traitement pour :

  • mesurer la tension entre le neutre dudit réseau et la masse,
  • comparer la tension mesurée à la consigne,
  • si la tension mesurée diffère de la consigne, corriger la valeur de la largeur d'impulsion de sorte que la tension entre le neutre dudit réseau et la masse soit sensiblement égale à la consigne,

- ledit dispositif comporte en outre un condensateur et une résistance montée en série avec l'inductance de compensation de manière à former un filtre passe-bas,
- l'onduleur comporte deux structures de pont en H respectivement réalisées par deux bras de commutation,
- le circuit de commande est configuré pour commander les commutateurs de manière à passer d'un mode d'alimentation dudit moteur à un mode de charge des moyens d'accumulation et inversement.

Selon l'un ou l'autre des procédés ci-dessus ou selon le dispositif de charge ci-dessus, le premier bras de commutation peut comprendre un point milieu connecté à une première borne d'une phase du moteur, le deuxième bras de commutation peut comporter un point milieu connecté à une première borne de l'inductance de compensation dont la deuxième borne est connectée au neutre du réseau tandis que la deuxième borne de la phase du moteur est connectée à une phase du réseau. Phase du moteur, réseau et inductance de compensation peuvent ainsi être montées en série. Le neutre du réseau peut être relié à la masse.

Par ailleurs, les moyens d'accumulation peuvent former une batterie générant une tension continue.

D'autres caractéristiques et avantages de l'invention ressortiront de la description suivante, donnée à titre d'exemple, sans caractère limitatif, en regard des dessins annexés sur lesquels :

- la figure 1a représente de façon schématique et simplifiée un dispositif de charge selon une première variante de réalisation,
- la figure 1b représente de façon schématique et simplifiée un dispositif de charge selon une deuxième variante de réalisation,

- la figure 2 représente plus en détail une partie du dispositif de charge de la figure 1a ou 1b,
- la figure 3 illustre une partie du dispositif de la figure 1a ou 1b sur laquelle le deuxième bras de commutation de l'onduleur du dispositif est représenté par un modèle moyen,
- la figure 4 est un schéma de la boucle ouverte pour le pilotage du deuxième bras de commutation du dispositif de la figure 1a,
- la figure 5 est un schéma de la boucle fermée d'asservissement pour le pilotage du deuxième bras de commutation du dispositif de la figure 1b, et
- la figure 6 représente un onduleur du dispositif de la figure 1a ou 1b avec deux pont en H entremêlés.

Sur ces figures et dans la suite de la description, les éléments sensiblement identiques sont identifiés par les mêmes numéros de référence.

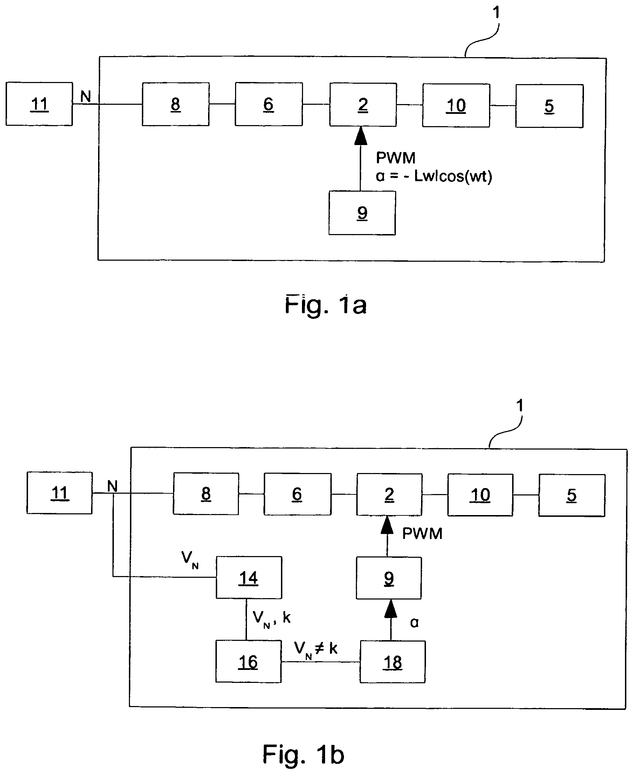

En se reportant aux figures 1a à 2, on voit représenté de façon schématique et simplifiée un dispositif 1 de charge pour véhicule automobile par exemple hybride ou électrique selon un exemple de mise en oeuvre de l'invention.

Ce dispositif de charge 1 comporte dans l'exemple considéré:

- un onduleur 2 et des moyens de commutation 4 intégrés à l'onduleur 2 comportant deux bras de commutation A, B,
- des moyens d'accumulation 5 formant une batterie générant une tension continue Ve,
- un moteur monophasé 6 à courant alternatif, représenté partiellement, dont l'enroulement 7 fait office d'inductance,
- une inductance supplémentaire 7' de compensation,
- une connectique 8,
- un circuit de commande 9 des moyens de commutation 4, et
- éventuellement un convertisseur DC/DC 10 disposé entre l'onduleur 2 et les moyens d'accumulation 5.

L'utilisation d'un convertisseur DC/DC 10 permet d'adapter les tensions et par conséquent d'optimiser le dimensionnement de l'onduleur sans dégrader le rendement. En effet la tension des moyens d'accumulation 5 varie avec leurs charges, les variations allant du simple au double, l'utilisation d'un convertisseur DC/DC 10 permet de dimensionner l'onduleur 2 pour une tension plus basse, ce dernier devant laisser passer deux fois moins de courant.

La connectique 8 permet le raccordement à la prise d'un réseau 11 électrique monophasé. Cette connectique peut comporter des moyens de verrouillage, non représentés dans les figures annexées, permettant d'empêcher l'accès à la prise électrique en cas de mise sous tension du dispositif 1. La connectique 8 peut être de plus associée à des seconds moyens de verrouillage (non représentés) empêchant à l'utilisateur l'accès aux conducteurs (qui sont alors sous tension) lors du mode d'alimentation.

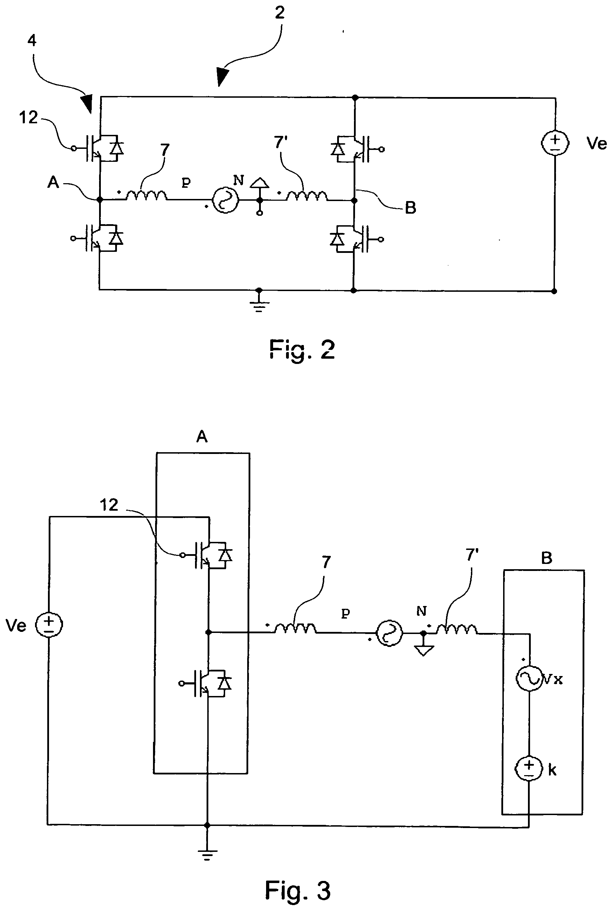

Comme on le constate sur la figure 2, l'enroulement 7 du moteur 6 est relié à la phase P du réseau 11. Cet enroulement 7 est relié au point milieu du premier bras A et le deuxième bras B est quant à lui relié à la deuxième inductance 7' de compensation reliée d'autre part au neutre N du réseau 11. Le neutre N du réseau 11 est également relié à la masse.

Dans l'exemple illustré, le dispositif 1 est prévu pour fonctionner selon deux modes :

- un mode d'alimentation dans lequel il assure l'alimentation en courant alternatif du moteur 6, à partir de la batterie 5, et
- un mode de charge dans lequel il assure la charge de la batterie 5 à partir du réseau électrique 11 relié à la terre, en employant l'enroulement 7 du moteur 6 comme inductance.

Le passage du mode d'alimentation au mode de charge peut être géré par le circuit de commande 9.

Le circuit de commande 9 pilote les deux commutateurs 12 de chaque bras A et B. En mode d'alimentation, le circuit de commande 9 pilote les bras A et B de façon à permettre la circulation d'un courant alternatif dans la phase du moteur 6. Les commutateurs 12, qui sont dans le présent exemple des transistors de puissance avec une diode montée en inverse, sont pilotés selon une commande PWM sinusoïdale classique, PWM étant l'anagramme de « Pulse Width Modulation » en anglais et signifiant en français modulation à largeur d'impulsions $\alpha$.

En revanche en mode de charge le pilotage des deux bras est indépendant de manière à compenser les courants basses fréquences.

Plus précisément, le circuit de commande 9 pilote le premier bras A pour absorber un courant sinusoïdal afin de réaliser la fonction PFC pour « Power Factor Corrector » en anglais signifiant correcteur de facteur de puissance.

Le deuxième bras B est piloté quant à lui de manière à générer une tension alternative en opposition de phase par rapport à la tension aux bornes de l'inductance 7' de compensation.

En effet, en se référant à la figure 3 sur laquelle le bras B est modélisé par un modèle moyen, on constate que la tension entre le neutre N du réseau 11 et la masse est égale à la somme des tensions aux bornes de l'inductance 7' de compensation et du deuxième bras B (relation (1)).

4

$$(1) \qquad V_N = Z_L . I_{AC} + Vx + k$$

(où $Z_L$ = l'impédance de l'inductance 7', $I_{AC}$ = le courant alternatif fourni par le réseau 11, Vx = la tension alternative générée par le deuxième bras, et k = la tension continue générée par le deuxième bras B)

Étant en régime sinusoïdal, la tension aux bornes de l'inductance 7' de compensation s'écrit selon la relation (2) :

$$(2) \qquad Z_L . I_{AC} = LwIcos(wt)$$

(où L = l'inductance, et w = la vitesse angulaire ou pulsation)

Ainsi, si la tension Vx est opposée à la tension L.wIcos(wt) aux bornes de l'inductance 7' de compensation, la tension $V_N$ entre le neutre N du réseau 11 et la masse est constante (relation (3)).

$$(3) \qquad V_N = LwIcos(wt) - LwIcos(wt) + k$$
$$V_N = k$$

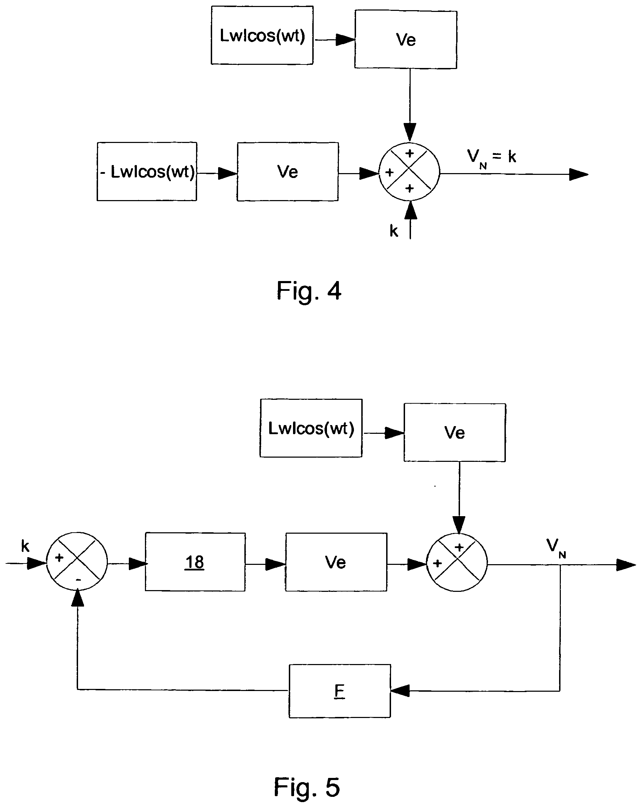

Pour ce faire, le circuit de commande 9 peut piloter le deuxième bras B en boucle ouverte (figures 1a et 4). Dans ce cas, on connaît précisément la valeur L de l'inductance 7' de compensation ainsi que la valeur du courant I. On est alors dans un système stable. La largeur d'impulsion $\alpha$ est donc choisie pour être égale en valeur moyenne à l'opposé de la tension aux bornes de l'inductance 7' de compensation soit - LwIcos(wt).

Durant le procédé de charge, les commutateurs 12 du deuxième bras de commutation B sont donc pilotés par des signaux de commande de modulation par largeur d'impulsion $\alpha$ égale en valeur moyenne à l'opposé de la tension aux bornes de l'inductance 7'.

Selon une alternative, le circuit de commande 9 peut piloter le deuxième bras B en boucle fermée (figures 1b et 5). Dans ce cas, la valeur de la tension $V_N$ entre le neutre N du réseau et la masse est asservie à la consigne k sans nécessiter de connaître la valeur L de l'inductance 7' ni le courant I.

Pour cela, le dispositif 1 comporte en outre :

- un moyen de mesure 14 de la tension entre le neutre N et la masse,
- un comparateur 16 pour comparer la tension mesurée à la consigne k, et
- un correcteur 18 pour ajuster la largeur d'impulsion $\alpha$ des signaux de commande PWM lorsque la tension entre le neutre N et la masse varie.

La tension $V_N$ étant découpée, un filtre F est nécessaire sur la chaine de retour pour faire l'acquisition de la tension.

Ainsi lors du procédé de charge, les commutateurs 12 du deuxième bras de commutation B sont pilotés par des signaux de commande dont la largeur d'impulsion est sans cesse adaptée de façon à ce que la tension $V_N$ entre le neutre N du réseau et la masse soit asservie à la consigne k.

A cet effet, on mesure la tension $V_N$, on la compare à la consigne k et lorsque la tension $V_N$ varie on corrige la largeur d'impulsion $\alpha$ en conséquence.

La tension $V_N$ est donc constante ce qui permet de limiter les perturbations basses fréquences.

De plus, afin de limiter également les perturbations hautes fréquences on peut prévoir en série avec l'inductance 7' de compensation un condensateur et une résistance formant un filtre passe bas.

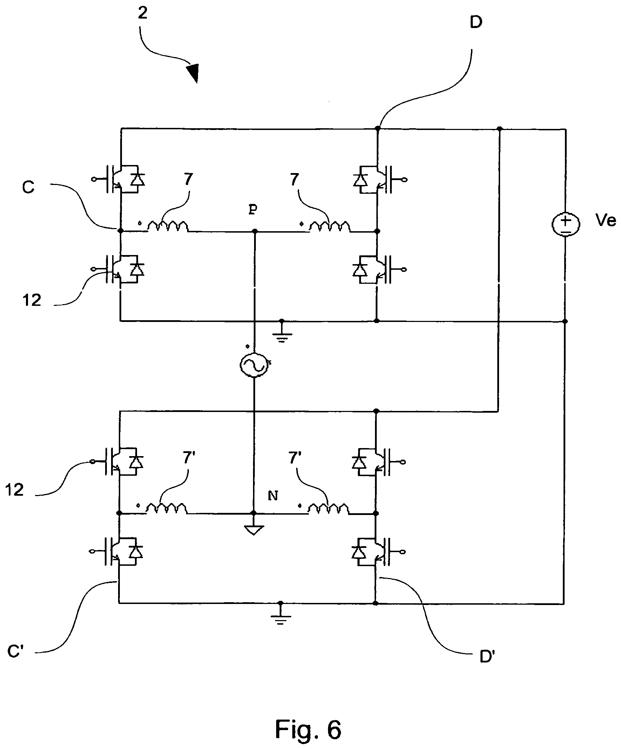

Par ailleurs, on a présenté ici un onduleur 2 avec deux bras de commutation A et B. On peut prévoir selon une variante illustrée sur la figure 6, un onduleur avec deux ponts en H entremêlés. Le premier pont en H est formé par deux bras de commutation C et C'et le deuxième pont en H est formé par deux bras de commutation D et D'.

Le fonctionnement est similaire par rapport aux exemples détaillés précédemment. En effet, dans ce cas, un des bras par exemple le quatrième bras D' sera piloté de façon similaire au deuxième bras B tel que décrit ci-dessus. Et les autres bras C,C' et D assurent la fonction de contrôle de facteur puissance PFC comme le premier bras A des exemples précédents.

Ainsi, avec ce procédé de charge, en particulier adapté pour la charge d'une batterie alimentant un moteur 6 dans un véhicule hybride ou électrique, on peut de façon simple éliminer les perturbations basses fréquences en maintenant une tension $V_N$ constante entre le neutre N du réseau 11 et la masse.

L'invention n'est pas limitée aux exemples qui viennent d'être décrits.

Le moteur peut notamment être autre qu'un moteur monophasé, et fonctionner avec un réseau monophasé ou ayant un nombre différent de phases.

L'invention n'est par ailleurs pas limitée à la charge de moyens d'accumulation d'un véhicule. L'invention concerne plus généralement un système connecté à un réseau électrique, le système ayant au moins un premier et un deuxième bras de commutation comportant chacun deux commutateurs et s'intéresse à la façon dont les commutateurs sont commandés de manière à ce que la tension entre le neutre du réseau et la masse soit constante, indépendamment du fait que le système soit intégré ou non à un dispositif de charge de moyens d'accumulation.

Dans tout ce qui précède, les commutateurs peuvent ou non être intégrés à un onduleur et l'inductance peut ou non former une phase d'un moteur électrique.

## Revendications

1.  Procédé de commande des commutateurs (12) d'un système connecté à un réseau électrique extérieur (11), le système comprenant au moins un premier (A) et un deuxième (B) bras de commutation comportant respectivement deux commutateurs (12), ledit procédé comportant une étape de pilotage des commutateurs (12) des bras de commutation (A, B) par transmission de signaux de commande de modulation par largeur d'impulsion ($\alpha$), **caractérisé en ce qu'**on pilote les commutateurs (12) du deuxième bras (B) de commutation en adaptant la largeur d'impulsion ($\alpha$) des signaux de commande de manière à générer une tension alternative (Vx) en opposition de phase par rapport à la tension aux bornes d'une inductance (7') de compensation connectée d'une part au deuxième bras (B) et d'autre part au neutre (N) dudit réseau (11), de sorte que la tension ($V_N$) entre le neutre (N) dudit réseau (11) et la masse soit continue.

2.  Procédé de charge de moyens d'accumulation (5) par un réseau électrique extérieur (11) par l'intermédiaire d'au moins un premier (A) et un deuxième (B) bras de commutation comportant respectivement deux commutateurs (12), ledit procédé comportant au moins l'étape du procédé selon la revendication 1 de pilotage des commutateurs (12) des bras de commutation (A, B) par transmission de signaux de commande de modulation par largeur d'impulsion ($\alpha$).

3.  Procédé selon la revendication 1 ou 2, dans lequel on pilote le deuxième bras (B) de commutation en boucle ouverte et dans lequel la largeur d'impulsion ($\alpha$) est choisie sensiblement égale en valeur moyenne à l'opposé de la tension alternative de l'inductance (7') de compensation.

4.  Procédé selon la revendication 1 ou 2, dans lequel on pilote le deuxième bras (B) de commutation en boucle fermée en variant la largeur d'impulsion ($\alpha$) de sorte que la tension ($V_N$) entre le neutre (N) dudit réseau (11) et la masse soit asservie à une consigne (k).

5.  Procédé de charge selon la revendication 4, comprenant les étapes suivantes :

    - on mesure la tension ($V_N$) entre le neutre (N) dudit réseau (11) et la masse,
    - on compare la tension ($V_N$) mesurée à la consigne (k),
    - si la tension mesurée diffère de la consigne (k), on modifie la largeur d'impulsion ($\alpha$) de sorte que la tension ($V_N$) entre le neutre (N) dudit réseau (11) et la masse soit sensiblement égale à la consigne (k).

6.  Procédé de charge selon l'une quelconque des revendications précédentes, dans lequel on pilote le premier bras (A) de manière à absorber un courant sinusoïdal.

7.  Dispositif électrique de charge de moyens d'accumulation (5) par un réseau électrique extérieur (11), lesdits moyens d'accumulation (5) étant configurés pour alimenter un moteur (6) à courant alternatif, ledit dispositif électrique comportant :

    - un onduleur (2) connecté entre ledit moteur (6) et les moyens d'accumulation (5), l'onduleur (2) comportant au moins un premier (A) et un deuxième (B) bras de commutation comprenant respectivement deux commutateurs (12), lesdits bras de commutation (A,B) étant reliés par leurs points milieu à la phase dudit moteur (6), et
    - un circuit de commande (9) desdits commutateurs (12) par transmission de signaux de commande de modulation par largeur d'impulsion ($\alpha$),

    **caractérisé en ce que** :

- ledit dispositif comporte en outre une inductance (7') de compensation reliée au deuxième bras (B) de commutation et au neutre (N) dudit réseau (11), et **en ce que**
- le circuit de commande (9) est configuré pour piloter les commutateurs (12) du deuxième bras (B) par transmission de signaux de commande dont la largeur d'impulsion ($\alpha$) est adaptée pour que le deuxième bras (B) génère une tension alternative (Vx) en opposition de phase par rapport à la tension aux bornes de l'inductance (7') de compensation, de sorte que la tension entre le neutre (N) dudit réseau (11) et la masse soit continue.

**8.** Dispositif selon la revendication 7, étant monophasé.

**9.** Dispositif selon l'une des revendications 7 ou 8, étant configuré pour piloter le deuxième bras de commutation en boucle ouverte.

**10.** Dispositif selon l'une des revendications 7 ou 8, étant configuré pour piloter le deuxième bras en boucle fermée par asservissement de la tension du neutre ($V_N$) à une consigne (k), et comportant au moins un moyen de traitement pour :

- mesurer la tension ($V_N$) entre le neutre (N) dudit réseau (11) et la masse,
- comparer la tension mesurée à la consigne (k),
- si la tension mesurée diffère de la consigne (k), corriger la valeur de la largeur d'impulsion ($\alpha$) de sorte que la tension du neutre ($V_N$) soit sensiblement égale à la consigne (k).

**11.** Dispositif électrique selon l'une quelconque des revendications 8 à 10, comportant en outre un condensateur et une résistance montée en série avec l'inductance de compensation de manière à former un filtre passe-bas.

**12.** Dispositif selon l'une quelconque des revendications 8 à 11, l'onduleur (2) comportant deux structures de pont en H respectivement réalisées par deux bras de commutation (C,C' ; D,D').

**13.** Dispositif selon l'une quelconque des revendications 8 à 12, le circuit de commande (9) étant configuré pour commander les commutateurs (12) de manière à passer d'un mode d'alimentation dudit moteur (6) à un mode de charge des moyens d'accumulation (5) et inversement.

**14.** Dispositif selon l'une quelconque des revendications 8 à 13, le premier bras de commutation (A) comprenant un point milieu connecté à une première borne d'une phase (7) du moteur, le deuxième bras (B) de commutation comportant un point milieu connecté à une première borne de l'inductance (7') de compensation dont la deuxième borne est connectée au neutre (N) du réseau (11) tandis que la deuxième borne de la phase (7) du moteur est connectée à la phase (P) du réseau (11).

**Patentansprüche**

**1.** Verfahren zur Steuerung der Schalter (12) eines Systems, das an ein externes Stromnetz (11) angebunden ist, wobei das System mindestens einen ersten (A) und einen zweiten (B) Schaltarm umfasst, die jeweils zwei Schalter (12) aufweisen, wobei das genannte Verfahren einen Schritt zur Ansteuerung der Schalter (12) der Schaltarme (A, B) durch Übertragen von Pulsweitenmodulationssteuersignalen ($\alpha$) aufweist, **dadurch gekennzeichnet, dass** die Schalter (12) des zweiten Schaltarms (B) durch Anpassung der Pulsweite ($\alpha$) der Steuersignale dergestalt angesteuert werden, dass eine Wechselspannung (Vx) in Gegenphase bezogen auf die Spannung an den Klemmen einer Kompensationsinduktivität (7'), die einerseits an den zweiten Arm (B) und andererseits an den Neutralleiter (N) des genannten Netzes (11) angebunden ist, erzeugt wird, dergestalt, dass die Spannung ($V_N$) zwischen dem Neutralleiter (N) des genannten Netzes (11) und der Masse eine Gleichspannung ist.

**2.** Verfahren zum Laden von Akkumulationsmitteln (5) durch ein externes Stromnetz (11) über mindestens einen ersten (A) und einen zweiten (B) Schaltarm, aufweisend jeweils zwei Schalter (12), wobei das genannte Verfahren mindestens den Schritt des Verfahrens nach Anspruch 1 zur Ansteuerung der Schalter (12) der Schaltarme (A, B) durch Übertragen von Pulsweitenmodulationssteuersignalen ($\alpha$) aufweist.

**3.** Verfahren nach Anspruch 1 oder 2, bei dem der zweite Schaltarm (B) in offener Schleife angesteuert wird und bei dem die Pulsweite ($\alpha$) im Mittelwert weitestgehend gleich dem Gegensatz der Wechselspannung der Kompensationsinduktivität (7') ausgewählt wird.

**4.** Verfahren nach Anspruch 1 oder 2, bei dem der zweite Schaltarm (B) in geschlossener Schleife durch Veränderung der Pulsweite ($\alpha$) dergestalt angesteuert wird, dass die Spannung ($V_N$) zwischen dem Neutralleiter (N) des genannten Netzes (11) und der Masse auf einen Sollwert (k) geregelt ist.

**5.** Verfahren zum Laden nach Anspruch 4, umfassend die folgenden Schritte:

- es wird die Spannung ($V_N$) zwischen dem Neutralleiter (N) des genannten Netzes (11) und der Masse gemessen,
- die gemessene Spannung ($V_N$) wird mit dem Sollwert (k) verglichen,
- falls die gemessene Spannung vom Sollwert (k) abweicht, wird die Pulsweite ($\alpha$) dergestalt verändert, dass die Spannung ($V_N$) zwischen dem Neutralleiter (N) des genannten Netzes (11) und der Masse weitestgehend gleich dem Sollwert (k) ist.

**6.** Verfahren zum Laden nach einem der vorangehenden Ansprüche, bei dem der erste Arm (A) dergestalt angesteuert wird, dass ein sinusförmiger Strom absorbiert wird.

**7.** Elektrische Vorrichtung zum Laden von Akkumulationsmitteln (5) durch ein externes Stromnetz (11), wobei die genannten Akkumulationsmittel (5) konfiguriert sind, um einen Wechselstrommotor (6) mit Strom zu versorgen, wobei die genannte elektrische Vorrichtung aufweist:

- einen Wechselrichter (2), der zwischen dem genannten Motor (6) und den Akkumulationsmitteln (5) angebunden ist, wobei der Wechselrichter (2) mindestens einen ersten (A) und einen zweiten (B) Schaltarm aufweist, die jeweils zwei Schalter (12) umfassen, wobei die genannten Schaltarme (A, B) durch ihre Mittelpunkte mit der Phase des genannten Motors (6) verbunden sind, und
- eine Schaltung zur Steuerung (9) der genannten Schalter (12) durch Übertragen von Pulsweitenmodulationssteuersignalen ($\alpha$),

**dadurch gekennzeichnet, dass**:

- die genannte Vorrichtung darüber hinaus eine Kompensationsinduktivität (7') aufweist, die mit dem zweiten Schaltarm (B) und mit dem Neutralleiter (N) des genannten Netzes (11) verbunden ist, und dass
- die Schaltung zur Steuerung (9) konfiguriert ist, um die Schalter (12) des zweiten Arms (B) durch Übertragen von Steuersignalen, deren Pulsweite ($\alpha$) angepasst ist, damit der zweite Arm (B) eine Wechselspannung (Vx) in Gegenphase bezogen auf die Spannung an den Klemmen der Kompensationsinduktivität (7') erzeugt, anzusteuern, dergestalt, dass die Spannung zwischen dem Neutralleiter (N) des genannten Netzes (11) und der Masse eine Gleichspannung ist.

**8.** Vorrichtung nach Anspruch 7, die einphasig ist.

**9.** Vorrichtung nach einem der Ansprüche 7 oder 8, die konfiguriert ist, um den zweiten Schaltarm in offener Schleife anzusteuern.

**10.** Vorrichtung nach einem der Ansprüche 7 oder 8, die konfiguriert ist, um den zweiten Arm in geschlossener Schleife durch Regelung der Spannung des Neutralleiters ($V_N$) auf einen Sollwert (k) anzusteuern, und die mindestens ein Verarbeitungsmittel umfasst, um:

- die Spannung ($V_N$) zwischen dem Neutralleiter (N) des genannten Netzes (11) und der Masse zu messen,
- die gemessene Spannung mit dem Sollwert (k) zu vergleichen,
- falls die gemessene Spannung vom Sollwert (k) abweicht, den Wert der Pulsweite ($\alpha$) dergestalt zu korrigieren, dass die Spannung des Neutralleiters ($V_N$) weitestgehend gleich dem Sollwert (k) ist.

**11.** Elektrische Vorrichtung nach einem der Ansprüche 8 bis 10, aufweisend darüber hinaus einen Kondensator und einen Widerstand, der in Reihe mit der Kompensationsinduktivität dergestalt montiert ist, dass ein Tiefpassfilter gebildet wird.

**12.** Vorrichtung nach einem der Ansprüche 8 bis 11, wobei der Wechselrichter (2) zwei H-Brückenstrukturen aufweist, die jeweils durch zwei Schaltarme (C,C'; D,D') realisiert sind.

**13.** Vorrichtung nach einem der Ansprüche 8 bis 12, wobei die Schaltung zur Steuerung (9) konfiguriert ist, um die Schalter (12) dergestalt zu steuern, dass von einem Modus der Stromversorgung des genannten Motors (6) zu einem Modus des Ladens der Akkumulationsmittel (5) übergegangen wird, und umgekehrt.

**14.** Vorrichtung nach einem der Ansprüche 8 bis 13, wobei der erste Schaltarm (A) einen Mittelpunkt aufweist, der an eine erste Klemme einer Phase (7) des Motors angebunden ist, wobei der zweite Schaltarm (B) einen Mittelpunkt aufweist, der an eine erste Klemme der Kompensationsinduktivität (7') angebunden ist, deren zweite Klemme an den Neutralleiter (N) des Netzes (11) angebunden ist, während die zweite Klemme der Phase (7) des Motors an die Phase (P) des Netzes (11) angebunden ist.

**Claims**

**1.** Method for controlling switches (12) of a system connected to an external electrical network (11), the system comprising at least a first (A) and a second (B) switching arm respectively comprising two switches (12), said method comprising a step for controlling the switches (12) of the switching arms (A, B) by transmission of pulse width modulation control signals ($\alpha$), **characterized in that** the switches (12) of the second switching arm (B) are controlled by adapting the pulse width ($\alpha$) of the control signals so as to generate an alternating voltage (Vx) in phase opposition relative to the voltage at the terminals of a compensation inductance (7') connected on the one hand to the second arm (B) and on the other hand to the neutral (N) of said network (11), such that the voltage ($V_N$) between the neutral (N) of said network (11) and ground is a direct voltage.

**2.** Method for charging accumulation means (5) via an external electrical network (11) via at least a first (A) and a second (B) switching arm respectively comprising two switches (12), said method comprising at least the method step according to Claim 1 for controlling the switches (12) of the switching arms (A,B) by transmission of pulse width modulation control signals ($\alpha$).

**3.** Method according to Claim 1 or 2, in which the second switching arm (B) is controlled in open loop mode and in which the pulse width ($\alpha$) is chosen to be substantially equal as an average value to the opposite of the alternating voltage of the compensation inductance (7').

**4.** Method according to Claim 1 or 2, in which the second switching arm (B) is controlled in closed loop mode by varying the pulse width ($\alpha$) so that the voltage ($V_N$) between the neutral (N) of said network (11) and ground is slaved to a setpoint (k).

**5.** Method according to Claim 4, comprising the following steps:

- the voltage ($V_N$) is measured between the neutral (N) of said network (11) and ground,
- the measured voltage ($V_N$) is compared to the setpoint (k),
- if the measured voltage differs from the setpoint (k), the pulse width ($\alpha$) is modified so that the voltage ($V_N$) between the neutral (N) of said network (11) and ground is substantially equal to the setpoint (k).

**6.** Charging method according to any one of the preceding claims, in which the first arm (A) is controlled so as to absorb a sinusoidal current.

**7.** Electrical device for charging accumulation means (5) via an external electrical network (11), said accumulation means (5) being configured to power an engine (6) with alternating current, said electrical device comprising:

- an inverter (2) connected between said engine (6) and the accumulation means (5), the inverter (2) having at least a first (A) and a second (B) switching arm respectively comprising two switches (12), said switching arms (A, B) being linked by their mid-points to the phase of said engine (6), and
- a control circuit (9) for controlling said switches (12) by transmission of pulse width modulation control signals ($\alpha$),

**characterized in that**:

- said device also includes a compensation inductance (7') linked to the second switching arm (B) and to the neutral (N) of said network (11), and **in that**
- the control circuit (9) is configured to control the switches (12) of the second arm (B) by transmission of control signals whose pulse width ($\alpha$) is adapted so that the second arm (B) generates an alternating voltage (Vx) in phase opposition relative to the voltage at the terminals of the compensation inductance (7'), such that the voltage between the neutral (N) of said network (11) and ground is a direct voltage.

**8.** Device according to Claim 7, being a single-phase device.

**9.** Device according to one of Claims 7 or 8, being configured to control the second switching arm in open loop mode.

**10.** Device according to one of Claims 7 or 8, being configured to control the second arm in closed loop mode by slaving the voltage of the neutral ($V_N$) to a setpoint (k), and including at least a processing means for:

- measuring the voltage ($V_N$) between the neutral (N) of said network (11) and ground,
- comparing the measured voltage to the setpoint (k),
- if the measured voltage differs from the setpoint (k), correcting the value of the pulse width ($\alpha$) so that the voltage of the neutral ($V_N$) is substantially equal to the setpoint (k).

**11.** Electrical device according to any one of Claims 8 to 10, also including a capacitor and a resistor mounted in series with the compensation inductance so as to form a low-pass filter.

**12.** Device according to any one of Claims 8 to 11, the inverter (2) having two H-configuration bridge structures respectively produced by two switching arms (C, C'; D, D').

**13.** Device according to any one of Claims 8 to 12, the control circuit (9) being configured to control the switches (12) so as to switch from a power supply mode for said engine (6) to a charging mode for the accumulation means (5) and vice versa.

**14.** Device according to any one of Claims 8 to 13, the first switching arm (A) having a mid-point connected to a first terminal of an engine phase (7), the second switching arm (B) comprising a mid-point connected to a first terminal of the compensation inductance (7') whose second terminal is connected to the neutral (N) of the network (11) whereas the second terminal of the engine phase (7) is connected to the phase (P) of the network (11).

Fig. 1a

Fig. 1b

Fig. 2

Fig. 3

Lwlcos(wt) → Ve

- Lwlcos(wt) → Ve → ⊕ → $V_N = k$

k

Fig. 4

k → ⊕ → 18 → Ve → ⊕ → $V_N$

Lwlcos(wt) → Ve

F

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010057893 A1